# EUROPEAN PATENT APPLICATION

(11) **EP 2 426 600 A2**
(43) Date of publication of application: **07.03.2012**
(21) Application number: 11006996.0
(22) Date of filing: 26.08.2011
(51) Int. Cl.: G06F 9/44

(54) **Systems and methods for controlling at least a portion of a flow of program activity of a computer program**

(30) Priority: 26.08.2010 US 869615
(71) Applicant: Red 5 Studios, Inc., Laguna Hills 92653 (CA)
(72) Inventor: Nikdel, Dave, Laguna Hills, CA 92653 (US); Su, John, Laguna Hills, CA 92653 (US); Rubin, Noel, Laguna Hills, CA 92653 (US); Garrett, Rob, Laguna Hills, CA 92653 (US)
(74) Representative: Käck, Jürgen

(57) **Abstract**

A method (500) of controlling at least a portion of a flow of program activity of a computer program including executing (505), by a processor, a computer program stored in memory to initiate the flow of program activity, the flow of program activity including a program environment generated by the computer program and displayed on a graphical user interface, wherein the computer program is adapted to allow an end user to interact with the program environment and at least one graphical menu being displayed (515) on the graphical user interface in conjunction with the program environment, wherein the computer program is adapted to allow an end user to interact with the at least one graphical menu without interrupting the ability of the end user to interact with the program environment.

## Description

### FIELD OF THE INVENTION

The present invention relates generally to systems and methods for controlling at least a portion of a flow of program activity of a computer program, and more specifically, but not by way of limitation, to systems and methods for controlling at least a portion of the flow of program activity that includes a program environment and a graphical menu generated by the computer program, wherein the computer program is adapted to allow an end user to interact with the at least one graphical menu without interrupting the ability of the end user to interact with the program environment.

### SUMMARY OF THE INVENTION

The invention is defined in independent claims 1, 14 and 15, respectively. Particular embodiments are set out in the dependent claims.

According to a first aspect, the present invention provides for a method of controlling at least a portion of a flow of program activity of a computer program, the method including at least the step of (i) executing, by a processor, the computer program stored in memory to initiate the flow of program activity, the flow of program activity comprising (a) a program environment generated by the computer program and displayed on a graphical user interface, wherein the computer program is adapted to allow an end user to interact with the program environment; and (b) at least one graphical menu being displayed on the graphical user interface in conjunction with the program environment, wherein the computer program is adapted to allow an end user to interact with the at least one graphical menu without interrupting the ability of the end user to interact with the program environment.

In some variations, the end user interacts with the at least one graphical menu and/or the program environment utilizing at least one input device. Further, the at least one graphical menu may be selectively displayed in response to a request to display the graphical menu. Preferably, the request to display the graphical menu includes receiving input from the at least one input device.

In further variations, the graphical menu includes a plurality of selections arranged to form a main wheel, wherein each of the selections represents one or more functions that affect at least a portion of the flow of program activity, and further wherein the main wheel is rotatable via input received from the at least one input device. Preferably, each of the plurality of selections is displayed in the form of an icon.

In still further variations, one of the plurality of selections is displayed as a current selection on the graphical menu, wherein the current selection changes as the main wheel rotates. Furthermore, information indicative of the current selection may be displayed proximate the current selection.

The computer program may include any of the following: a computer operating system, a video game, a MMORPG, a graphic design program, a spreadsheet, a web browser, a word processing program, a virtual reality simulation, and/or three-dimensional modeling.

According to a second aspect, the present invention provides a method for on the fly generation of a graphical menu operatively coupled to at least one control device, the method including (i) executing, by a processor, a computer program stored in memory to initiate a flow of program activity, the flow of program activity comprising a program environment generated by the computer program and displayed on a graphical user interface, the program environment including one or more interactive objects, wherein the computer program is adapted to allow an end user to interact with the program environment; (ii) during the flow of program activity: generating a graphical menu by receiving input from the at least one user input device indicative of an interaction with one of the one or more interactive objects; and assembling the graphical menu by arranging one or more selections to form a main wheel, wherein the one or more selections correspond to the functions of an interactive object being interacted with; and (iii) displaying the graphical menu on the graphical user interface in conjunction with the program environment, wherein the computer program is adapted to allow an end user to interact with the at least one graphical menu without interrupting the ability of the end user to interact with the program environment.

In some variations, the step of generating occurs upon an interaction between the at least one control device and one of the one or more interactive objects. Furthermore, an interaction may include locating proximate to the at least one interactive object, a cursor operatively coupled to the at least one input device and selecting the at least one interactive object via the at least one control device.

In further variations, the step of displaying includes selectively displaying the graphical menu in response to a request to display the graphical menu. Preferably, the plurality of selections is displayed in the form of an icon.

In still further variations, one of the one or more selections is displayed as a current selection in the middle of the graphical interface, wherein the current selection changes as the main wheel rotates. In some variations, after receiving input indicative of a selection of the current selection, an additional wheel is displayed in place of the main wheel, the additional wheel including an additional plurality of visual objects representing one or more functions corresponding to the current selection, the one or more functions affecting at least a portion of the flow of program activity.

In other variations of the second aspect, the at least one control device includes a mouse having at least one of: a scroll wheel for changing the current selection; a first button for selecting the current selection; and a second button for canceling the current selection. The scroll wheel may be capable of selecting the current selection. Input received from the second button may cause the main wheel to be displayed if the additional wheel is being displayed and/or input received from the second button may close the graphical menu if the additional wheel is being displayed.

The computer program may include any of the following: a computer operating system, a video game, a graphic design program, a spreadsheet, a web browser, a word processing program, a virtual reality simulation, three-dimensional modeling, and any combination thereof.

According to a third aspect, the present invention provides a system for controlling at least a portion of a flow of program activity of a computer program, the system including (a) a memory for storing the computer program; (b) a processor for executing the computer program stored in memory to initiate the flow of program activity, the flow of program activity including a program environment generated by a environment module of the computer program, the program environment being displayed on a graphical user interface, wherein the computer program is adapted to allow an end user to interact with the program environment; and at least one graphical menu generated by a graphical menu module, the at least one graphical menu being displayed on the graphical user interface in conjunction with the program environment, wherein the computer program is adapted to allow an end user to interact with the at least one graphical menu without interrupting the ability of the end user to interact with the program environment.

In some variations, the graphical menu module creates an on the fly graphical menu during the flow of program activity of the computer program by: (i) receiving input from at least one user input device indicative of an interaction with at least one interactive object located in the program environment; (ii) assembling the graphical menu by arranging one or more selections to form a main wheel, wherein the one or more selections correspond to one or more functions of the at least one interactive object; and (iii) outputting the graphical menu to the graphical user interface via a graphical user interface module in conjunction with the program environment, wherein the computer program is adapted to allow an end user to interact with the at least one graphical menu without interrupting the ability of the end user to interact with the program environment.

In further variations, the graphical menu module creates an on the fly graphical menu each time the at least one user input device interacts with one of the at least one interactive object located in the program environment.

An interaction may include locating, proximate to the at least one interactive object, a cursor operatively coupled to the at least one input device and selecting the at least one interactive object.

In still further variations, the step of displaying includes selectively displaying the graphical menu in response to a request to display the graphical menu. Further, each of the one or more selections may be displayed as a visual object.

In other variations, one of the one or more selections is displayed as a current selection in the middle of the graphical interface, wherein the current selection changes as the main wheel rotates. Preferably, after receiving input indicative of a selection of the current selection, an additional wheel is displayed in place of the main wheel, the additional wheel including an additional plurality of visual objects representing one or more functions corresponding to the current selection, the one or more functions affecting at least a portion of the flow of program activity.

According to a forth aspect, the present invention provides a method of controlling at least a portion of a flow of program activity of an online videogame, wherein the online videogame includes a global program residing on a world server and a client program residing on a client system, the method including (a) executing the global program stored in memory via a processor to initiate a flow of global program activity, the flow of global program activity comprising a global environment generated by the global program, the global program being adapted to maintain the global environment based in part upon input received from the plurality of client systems, wherein the input received is indicative of an interaction with a local environment, wherein the local environment includes at least a portion of the global environment, and wherein each interaction includes information indicative of a location of an object representing the client system relative to the global environment; and an action, wherein the action includes at least one of (i) an interaction between a client system and another client system relative to the global environment and (ii) an interaction between the client system and the local environment; (b) wherein at least a portion of the received input is received from a client system executing a client program that creates a flow of client program activity, the client program being adapted to allow an end user to interact with the local environment; and generating at least one graphical menu, the at least one graphical menu having one or more selections corresponding to one or more functions that control at least a portion of the flow of client program activity, wherein the at least one graphical menu is displayed on the client system in conjunction with the local environment such that the end user may interact with the at least one graphical menu without interrupting the ability of the end user to interact with the local environment.

In some variations, the client program creates an on the fly graphical menu during the flow of client program activity by: (i) receiving input from at least one user input device indicative of an interaction with at least one interactive object located in the local environment; (ii) assembling the graphical menu by arranging one or more selections to form a main wheel, wherein the one or more selections correspond to the one or more functions of the at least one interactive object; and (iii) outputting the graphical menu to the graphical user interface in conjunction with the local environment, wherein the client program is adapted to allow an end user to interact with the at least one graphical menu without interrupting the ability of the end user to interact with the local environment.

In further variations, the main wheel is vertically aligned with a centerline of the graphical menu. Alternatively, the main wheel is disposed horizontally and intersects a centerline of the graphical menu.

According to one variation, the graphical menu engine creates an on the fly graphical menu for each interaction between the at least one user input device and an interactive object in the local environment.

An interaction may include locating proximate to the at least one interactive object, a cursor operatively coupled to the at least one input device. Further, the step of displaying may include selectively displaying the graphical menu in response to a request to display the graphical menu.

In still further variations, each of the one or more selections is displayed as a visual object. A visual object may include an icon representative of a function corresponding to the current selection.

Preferably, one of the one or more selections is displayed as a current selection in the middle of the graphical interface, wherein the current selection changes as the main wheel rotates. After receiving input indicative of a selection of the current selection, an additional wheel may be displayed in place of the main wheel. The additional wheel includes an additional plurality of visual objects representing one or more functions corresponding to the current selection. The one or more functions affects at least a portion of the flow of client program activity.

In one variation, the object representing the client system includes an avatar.

According to a fifth aspect, the present invention provides for a computer readable storage medium having a client program embodied thereon, the client program executable by a processor of a client system to perform a method of controlling at least a portion of a flow of client program activity of an online videogame that also comprises a global program residing on a world sever, the method including executing, by a processor, the client program to initiate the flow of client program activity, the flow of client program activity including a local environment generated by the client program and displayed on a graphical user interface, the local environment representative at least a portion of a global environment maintained by the global program, wherein the client program is adapted to allow an end user to interact with the local environment and at least one graphical menu generated by at least one of the client program and the global program, the at least one graphical menu being displayed on the graphical user interface in conjunction with the local environment, wherein the client program is adapted to allow an end user to interact with the at least one graphical menu without interrupting the ability of the end user to interact with the local environment.

According to a sixth aspect, the present invention provides for a computer readable storage medium having a computer program embodied thereon, the computer program executable by a processor in a computing system to perform a method for controlling at least a portion of a flow of program activity of the computer program, the method comprising: executing, by a processor, the computer program to initiate the flow of program activity, the flow of program activity comprising: a program environment generated by the computer program and displayed on a graphical user interface, wherein the computer program is adapted to allow an end user to interact with the program environment; and at least one graphical menu generated by the computer program and displayed on the graphical user interface in conjunction with the program environment, wherein the computer program is adapted to allow an end user to interact with the at least one graphical menu without interrupting the ability of the end user to interact with the program environment.

In some variations, the step of displaying includes selectively displaying the graphical menu in response to a request to display the graphical menu.

In further variations, a request to display the graphical menu includes input received from at least one user input device.

The graphical menu may include one or more selections corresponding to one or more functions associated with the one or more interactive objects included in the program environment.

In some further variations, the graphical menu includes a first plurality of selections arranged to form a main wheel, wherein the each of the selections represent one or more functions that affect at least a portion of the flow of program activity, and further wherein the main wheel is rotated via input received from at least one user input device. Each of the plurality of selections may be displayed as a visual object.

According to other variations, one of the first plurality of selections is displayed as a current selection on the graphical menu, wherein the current selection changes as the main wheel is rotated.

The step of receiving input indicative of a selection of the current selection may display an additional wheel in place of the main wheel, the additional wheel including an additional plurality of visual objects represent one or more functions corresponding to the current selection that affect at least a portion of the flow of program activity.

According to a seventh aspect, the present invention provides for a computer readable storage medium having a client program embodied thereon, the client program executable by a processor of a client system to perform a method of controlling at least a portion of a flow of client program activity of an online videogame that also comprises a global program residing on a world sever, the method comprising: executing, by a processor, the client program to initiate the flow of client program activity, the flow of client program activity comprising: a local environment generated by the client program and displayed on a graphical user interface, the local environment representative of at least a portion of a global environment maintained by the global program, wherein the client program is adapted to allow an end user to interact with the local environment; and at least one graphical menu generated by at least one of the client program and the global program, the at least one graphical menu being displayed on the graphical user interface in conjunction with the local environment, wherein the client program is adapted to allow an end user to interact with the at least one graphical menu without interrupting the ability of the end user to interact with the local environment.

According to an eighth aspect, the present invention provides for a method of controlling at least a portion of a flow of program activity of a computer program, the method comprising: executing, by a processor, a computer program stored in memory to initiate the flow of program activity, the flow of program activity comprising: a program environment generated by the computer program and displayed on a graphical user interface, the computer program adaptable to allow an end user to interact with the program environment; and at least one non-modal graphical menu generated by the computer program and being displayed on the graphical user interface in conjunction with the program environment, the graphical menu including a plurality of selections arranged to form a main wheel, each of the selections representing one or more functions that affect at least a portion of the flow of program activity, the main wheel rotatable via input received from at least one user input device.

### BRIEF DESCRIPTION OF THE DRAWINGS

FIG. 1 is a schematic diagram of an exemplary environment for practicing the present invention.

FIG. 2 illustrates an exemplary computing system that may be used to implement embodiments of the present technology.

FIG. 3 is a schematic of an exemplary architecture of a computer program constructed in accordance with the present disclosure.

FIG. 4A is an illustrative example of a program environment generated by a computer program.

FIG. 4B is an illustrative example of a navigation wheel generated by a computer program for controlling the flow of program activity of a computer program, shown in conjunction with a portion of the program environment of FIG. 4A.

FIG. 4C is an illustrative example of a navigation wheel having a horizontally disposed main wheel.

FIG. 5 is an exemplary flow chart of a method for controlling at least a portion of the flow of program activity of a computer program.

FIG. 6 is a schematic view of exemplary navigation wheel menus.

FIG. 7 is a schematic of an exemplary online videogame program divided between client systems and a world server, the online videogame program incorporating embodiments of the present invention.

### DETAILED DESCRIPTION OF EXEMPLARY EMBODIMENTS

The creation and utilization of graphical menus for controlling various aspects of computer programs are well known. While the creation and utilization of graphical menus are well known, these commonly known methods and systems suffer from significant implementational drawbacks. More specifically, when a computer program is executed, it begins a flow of program activity that includes a program environment displayed on a graphical user interface. An end user may interact with the program environment via the graphical user interface utilizing one or more input devices such as a mouse or keyboard to manipulate the program environment.

For example, a computer program such as a first-person game or an online videogame may include a client program resident on a client computer. The client computer communicates with a world server and executes the client program to generate a flow of client program activity that includes a local environment that is a subset of a larger global environment managed by the world server. The local environment and global environment are dynamically (e.g., automatically and continuously updated) maintained based upon predetermined functions of the global program and/or the actions of the end user interacting with the global environment. Generally speaking, the term local environment includes a visual representation of an avatar representing the end user, the avatar being positioned within a landscape that may include a plurality of interactive objects such as vehicles, weapons, and the like. In the case of an online videogame, the global environment may include the avatars of other end users located in the same portion of the global environment as the end user.

During game play, the end user may interact with the local environment by way of one or more graphical menus that are displayed in conjunction with the local environment. In general, a graphical menu may include a plurality of selections corresponding to functions associated with at least one of the plurality of interactive objects of local environment, the local environment itself, and in the case of an online videogame, one or more additional end users located in the same portion of the global environment. For example, an end user within the local environment may wish to activate a function that will affect the avatar of the end user. Clicking a key on the keyboard or a button on the mouse brings up a graphical menu that includes one or more selections corresponding to functions that correspond to the avatar of the end user, such as change the point of view, change a weapon, change armor, and the like.

Unfortunately, the graphical menus are often overly complicated. For example, the graphical menus may contain too many selections and/or may require several sequential actions (e.g., browsing and selecting) to activate the desired action. Moreover, the graphical menu is typically overlaid onto the local environment obscuring significant portions of the local environment. Because of the time consuming nature of graphical menu interactions, a suspension of game play is required, otherwise actions occurring in the local environment may unfairly affect the end user.

While this invention is susceptible of embodiment in many different forms, there is shown in the drawings and will herein be described in detail several specific embodiments with the understanding that the present disclosure is to be considered as an exemplification of the principles of the invention and is not intended to limit the invention to the embodiments illustrated.

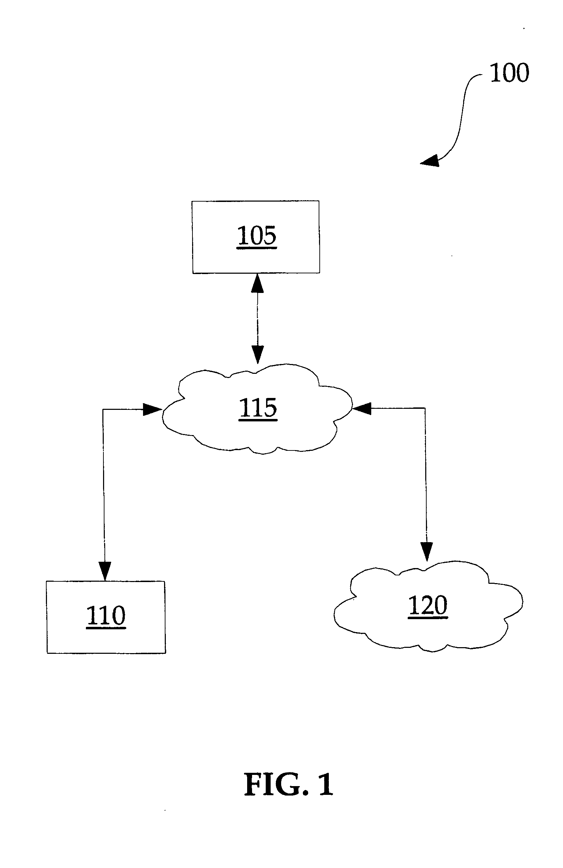

FIG. 1 illustrates an exemplary environment 100 for practicing the present invention. In general, the environment 100 may include a computing system 105 having one or more computer programs residing thereon, for example a computing system operated by an end user. In additional exemplary embodiments, the exemplary environment 100 may include both computing system 105 and server 110 cooperating together to execute separate components (e.g., module, engine, and the like) of a computer program. As used throughout, the term "computer program" may comprise executable instructions stored in memory. The computing system 105 and server 110 may be connected to one another via a network 115 such as the Internet or a local area network. According to some embodiments, the server 110 may include a plurality of servers 110. It will be understood that a portion of the one or more computer programs may alternatively reside in a cloud based system 120.

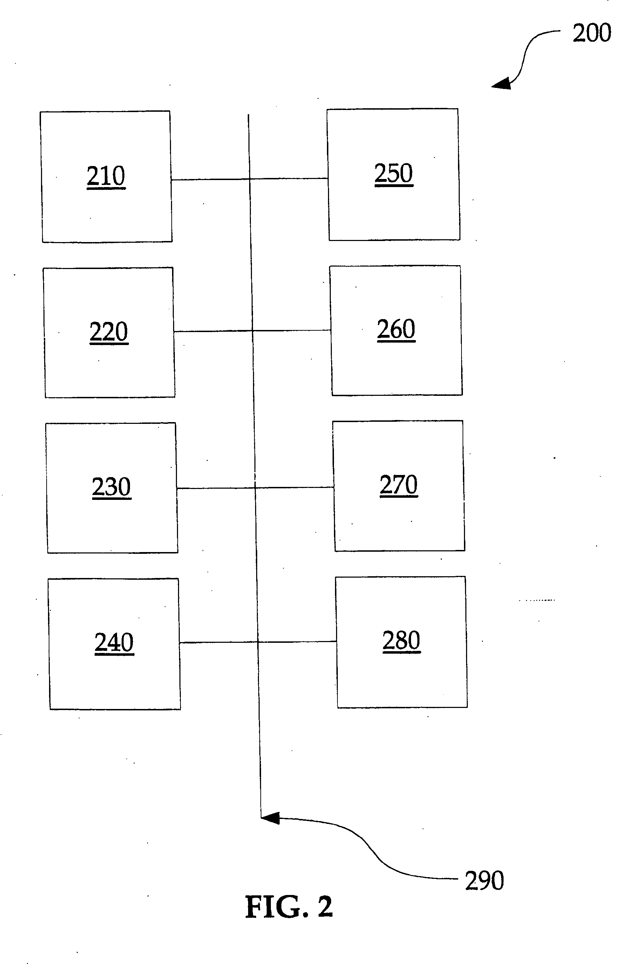

FIG. 2 illustrates an exemplary computing system 200 that may be used to implement an embodiment of the present technology. The system 200 of FIG. 2 may be implemented in the contexts of the likes of computing system 105 or server 110 (FIG. 1). The computing system 200 of FIG. 2 includes one or more processors 210 and main memory 220. Main memory 220 stores, in part, instructions and data for execution by processor 210. Main memory 220 may store the executable code when in operation. The system 200 of FIG. 2 further includes a mass storage device 230, portable storage medium drive(s) 240, output devices 250, user input devices 260, a graphics display 270, and peripheral devices 280.

The components shown in FIG. 2 are depicted as being connected via a single bus 290. The components may be connected through one or more data transport means. Processor unit 210 and main memory 220 may be connected via a local microprocessor bus, and the mass storage device 230, peripheral device(s) 280, portable storage device 240, and display system 270 may be connected via one or more input/output (I/O) buses.

Mass storage device 230, which may be implemented with a magnetic disk drive or an optical disk drive, is a non-volatile storage device for storing data and instructions for use by processor unit 210. Mass storage device 230 may store the system software for implementing embodiments of the present invention for purposes of loading that software into main memory 220.

Portable storage device 240 operates in conjunction with a portable non-volatile storage medium, such as a floppy disk, compact disk, digital video disc, or USB storage device, to input and output data and code to and from the computer system 200 of FIG. 2. The system software for implementing embodiments of the present invention may be stored on such a portable medium and input to the computer system 200 via the portable storage device 240.

Input devices 260 provide a portion of a user interface. Input devices 260 may include an alphanumeric keypad, such as a keyboard, for inputting alpha-numeric and other information, or a pointing device, such as a mouse, a trackball, stylus, or cursor direction keys. Additionally, the system 200 as shown in FIG. 2 includes output devices 250. Suitable output devices include speakers, printers, network interfaces, and monitors.

Display system 270 may include a liquid crystal display (LCD) or other suitable display device. Display system 270 receives textual and graphical information, and processes the information for output to the display device.

Peripherals 280 may include any type of computer support device to add additional functionality to the computer system. Peripheral device(s) 280 may include a modem or a router.

The components provided in the computer system 200 of FIG. 2 are those typically found in computer systems that may be suitable for use with embodiments of the present invention and are intended to represent a broad category of such computer components that are well known in the art. Thus, the computer system 200 of FIG. 2 may be a personal computer, hand held computing system, telephone, mobile computing system, workstation, server, minicomputer, mainframe computer, or any other computing system. The computer may also include different bus configurations, networked platforms, multi-processor platforms, etc. Various operating systems may be used including Unix, Linux, Windows, Macintosh OS, Palm OS, Android, iPhone OS and other suitable operating systems.

It is noteworthy that any hardware platform suitable for performing the processing described herein is suitable for use with the technology. Computer-readable storage media refer to any medium or media that participate in providing instructions to a central processing unit (CPU), a processor, a microcontroller, or the like. Such media may take forms including, but not limited to, non-volatile and volatile media such as optical or magnetic disks and dynamic memory, respectively. Common forms of computer-readable storage media include a floppy disk, a flexible disk, a hard disk, magnetic tape, any other magnetic storage medium, a CD-ROM disk, digital video disk (DVD), any other optical storage medium, RAM, PROM, EPROM, a FLASHEPROM, any other memory chip or cartridge.

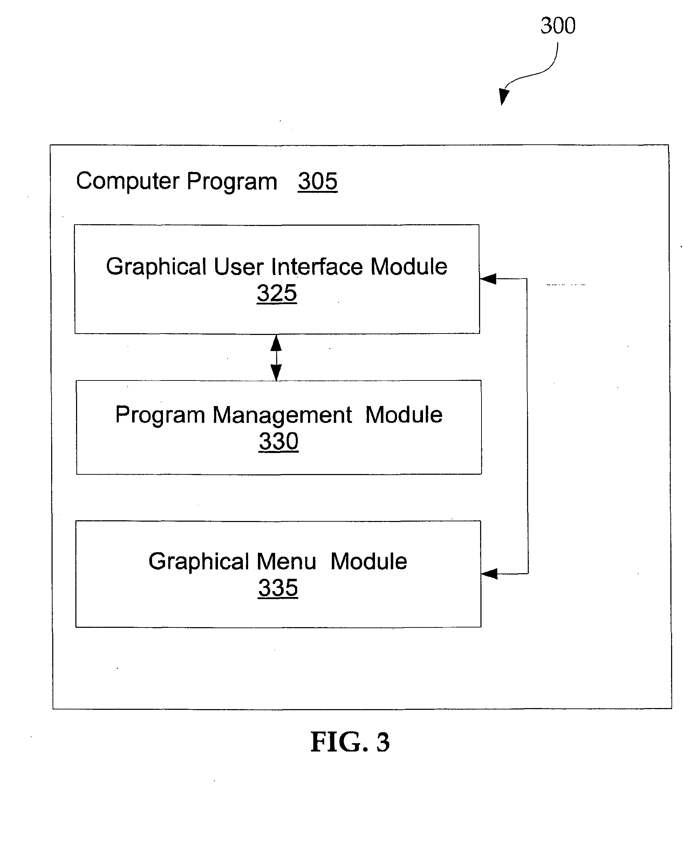

FIG. 3 illustrates an exemplary schematic 300 of a computer program 305 for practicing the invention. The computer program 305 resides on the computing system 105 (or server 110) described in greater detail in FIG. 2. The computer program 305 includes a graphical user interface module 325, a program management module 330, and a graphical menu module 335. Additionally, the constituent modules can be executed by a processor of the computing system to effectuate respective functionalities attributed thereto. It is noteworthy that the computer program 305 may be composed of more or fewer modules and engines (or combinations of the same) and still fall within the scope of the present technology. For example, the functionalities of the program management module 330 and the functionalities of the graphical menu module 335 may be combined into a single module or engine.

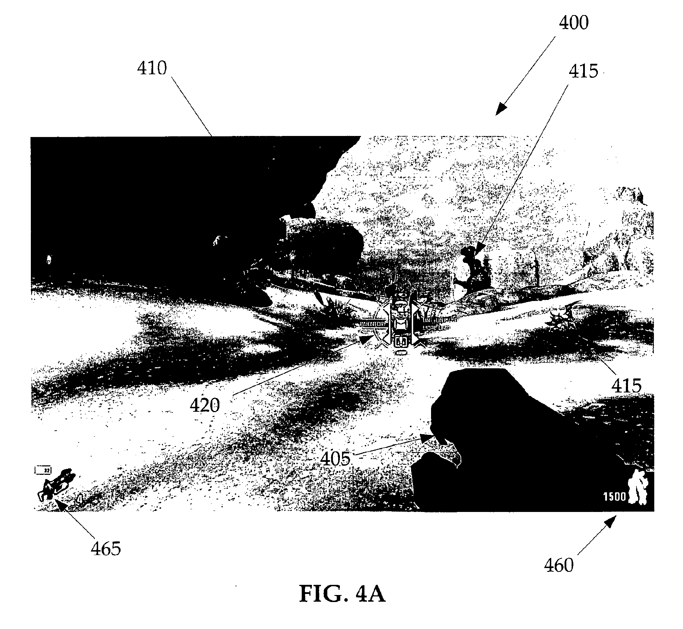

Referring now to FIGS. 3 and 4A collectively, execution of the computer program 305 begins a flow of program activity managed by the program management module 330. In accordance with the present disclosure, the program management module 330 may generate a program environment 400 that is dynamic in nature (e.g., capable of continuous updating based upon end user interactions and/or predetermined computer program actions).

With regards to some exemplary embodiments, the computer program 305 may include an online videogame such as a first-person shooter. Accordingly, the program environment 400 generated and maintained by the program management module 330 may include an avatar 405 representative of the end user positioned within a landscape 410. The landscape 410 may include one or more interactive objects 415 such characters, other avatars, buildings, weapons, and the like. The graphical user interface module 325 may output the program environment 400 generated by the program management module 330 in a format perceivable by an end user, typically on a display of a computing system. It will be understood that the movement of the avatar 405 within the program environment 400 is likewise controlled by the at least one input device.

The end user may interact with the program environment 400 by utilizing one or more input devices (also known as control devices) operatively coupled to the computing system. It will be understood that the term interacting may include selecting, choosing, clicking, highlighting, panning, zooming, scrolling, activating, actuating and the like.

According to some non-limiting examples, interactions may include an end user clicking on an interactive object 415 by utilizing a cursor operatively coupled to a mouse. Interactions between the input devices and the program environment 400 are received and evaluated by the program management module 330 which may cause the graphical user interface module 325 to modify the program environment 400 based upon the received input. For example, receiving input indicative of a request for an avatar to move forward may cause the program management module 330 to modify the appearance of the landscape 410 of the program environment 400.

According to other embodiments, interactions between the input devices and the program environment 400 may cause the graphical menu module 335 generate a graphical menu such as a navigation wheel 420. Similarly to the program environment 400, the graphical user interface module 325 may output the navigation wheel 420 generated by the graphical menu module 335 to a display of the computing system. The navigation wheel 420 may include selections corresponding to one or more functionalities that control at least a portion of the flow of program activity of the computer program 305. For example, the navigation wheel 420 may allow for the selection of baseline functionalities of the computer program 305 such as pausing game play, saving game play, volume, display settings, and the like. It will be understood that rather than interacting with objects within the landscape 410, the navigation wheel 420 may be utilized to display one or more global functionalities related to the computer program 305 such as a friends list.

In other embodiments, the navigation wheel 420 may be utilized to select interactions between the end user represented by an avatar 425 one or more interactive objects 415 located within the program environment 400. Stated otherwise, the navigation wheel 420 operates in a non-modal fashion such that displaying and interacting with the navigation wheel 420 does not interrupt the flow of activity (communications between the end user and the computing system) of the computer program 305. Moreover, the navigation wheel 420 may provide non-modal access to functions that are commonly provided by computer programs as modal functions, such as various graphical menus utilized in online videogames. According to various embodiments of the present technology, the navigation wheel 420 may be non-modal in that the use of the mouse wheel, alternative functions, keywords, keyboard shortcuts, mouse buttons and the like may be used to access menu items, functionalities, macros, actions provided in menus, and the like, without altering, interfering, interrupting, or otherwise modifying the actions of the end user, who is free to modify the X-Y coordinates of the mouse or input device in order to freely access program flow and focus, including changing an avatar's viewing angle, or repositioning the mouse or equivalent input device to selecting/highlighting other objects in the program environment.

The program environment 400 may also include various other application specific objects such as health status 460 of an avatar and current weapon selection 465 that may include information indicative of an amount of ammunition left for the currently selected weapon.

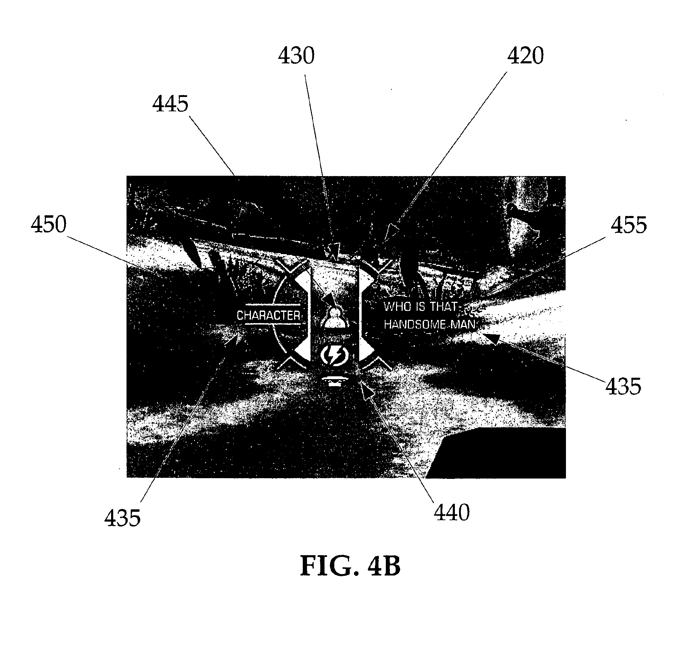

Referring now to FIG. 4B, generally speaking, the navigation wheel 420 may be generated by the graphical user interface module 325 to minimize the ability of the navigation wheel 420 to obscure or otherwise impair a view of the landscape 410 of the program environment 400. Therefore, the navigation wheel 420 may include a circular shaped main wheel 430 and informational text 435 located laterally from the center of the main wheel 430. Portions of the navigation wheel 420 may be at least partially transparent to further reduce interference with the landscape 410.

According to some embodiments, the circular main wheel 430 may be vertically aligned with a centerline of the navigation wheel 420. In greater detail, the main wheel 430 may include a plurality of icons 440 corresponding to functions associated with the selected interactive object 415. The icons 440 may be suggestive of the underlying functionality; for example, an icon 440 having the functionality of causing the avatar 425 to pick up an object may be in the form of a hand. The icon 440 located in the middle of the navigation wheel 420 is referred to as the current selection 445. It will be understood that the current selection 445 may change upon rotation of the navigation wheel 420 by the end user. Moreover, the current selection 445 may be highlighted or otherwise enhanced by the graphical user interface module 325 to visually designate the selection as the current selection 445. Clicking or otherwise selecting the current selection 445 by the end user causes the computer program 305 to perform the functionality associated with the current selection 445.

The navigation wheel 420 may be populated with selections on the fly based upon the dynamic nature of the program environment 400 of the computer program 305 such as interactions between the end users and interactive objects 415 located with in the landscape 410. More specifically, the program environment 400 may change based upon input received from the end users or by predetermined actions generated by the computer program. Therefore, the interactive objects 415 located within the landscape 410 may change over time. For example, the computer program 305 may generate one or more enemies for the end user to interact with, each of the enemies having a particular set of interactive properties (e.g., health, armor, weaknesses, strength, and the like). The end users may attack the enemies by calling up the navigation wheel 420, positioning the navigation wheel 420 proximate the enemy, and repositioning the X-Y coordinates of the mouse to highlight and therefore select the enemy as the focus. The action of selecting the enemy populates the navigation wheel 420 with functions corresponding to the enemy, such as attack, run, and the like. As stated above, because enemies may have different sets of interactive properties, the selections of the navigation wheel 420 may change based upon the enemy selected. Moreover, interaction with a friendly interactive object such as another avatar (not shown) may populate the navigation wheel 420 with an entirely different set of selections.

Moreover, displayed concurrently and adjacently to the current selection 445, the informational text 435 may provide end users instructional information about the current selection 445. According to the present disclosure, the informational text 435 may include both function name 450 and functional description 455. For example, if the current selection 445 is an object query icon in the form of a person, located left of the current selection 445 may be a functional name 450 of "Character" and located right of the current selection 445 may be a functional description 455 of "Who is that handsome man."

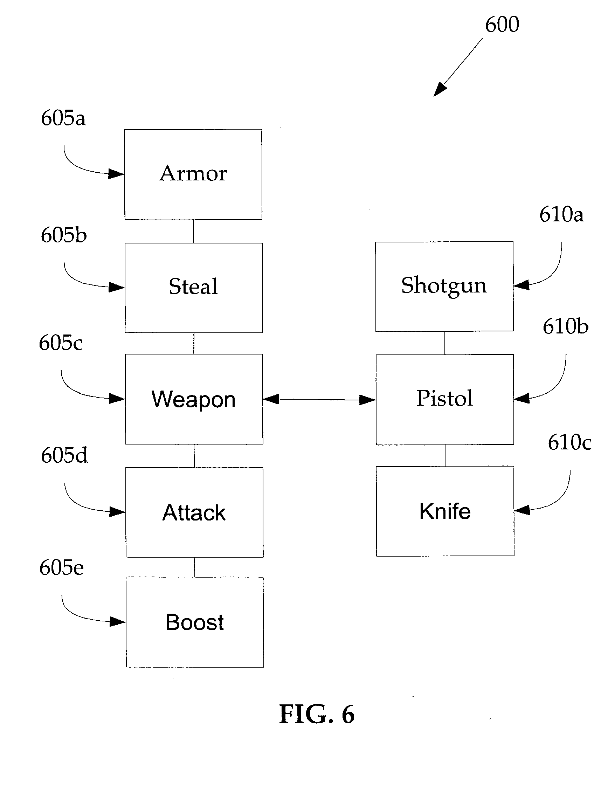

It will be understood that selecting the current selection 445 may call up additional wheels having selections that correspond to the current selection 445. Generally speaking, the navigation wheel 420 allows a user to move vertically and horizontally through a hierarchy of menus (such as the hierarchy shown in exemplary FIG. 6). In practice, the functionality associated with the current selection 445 may be to call up an additional wheel (not shown) or sub-menu of items. For example, selecting the current selection 445 of "Technique" may bring up an additional wheel that includes one or more techniques such as physical maneuvers or "attacks" that may be inflicted upon an interactive object 415 or character within the landscape 410.

It will be further understood that that the navigation wheel 420 may provide access to deep menu functions by displaying and receiving selections from several menus arranged into a large vertical hierarchy of menus.

Additional examples of functionalities may include end user created macros that enable the end user to further enhance the playability of the computer program 305. For example, the end user may frequently perform the actions of locate an enemy, attack the located enemy, and pickup items dropped by the enemy. These separate functions may be concatenated or otherwise grouped together into a single function that can be assigned an icon defined by the end user and added to one of the wheels of the navigation wheel 420. According to various embodiments of the invention, the end user may select a macro, which in turn causes multiple actions to occur in rapid succession or near-simultaneous steps. Further, the end user may be shown a highlighted area of the program environment 400 where all the multiple actions occur after a selection of a given macro. It will be understood that systems and methods for creating, utilizing, and assigning macros in computer programs are beyond the scope of this application, but would be readily understood and applied to the present disclosure by one of ordinary skill in the art.

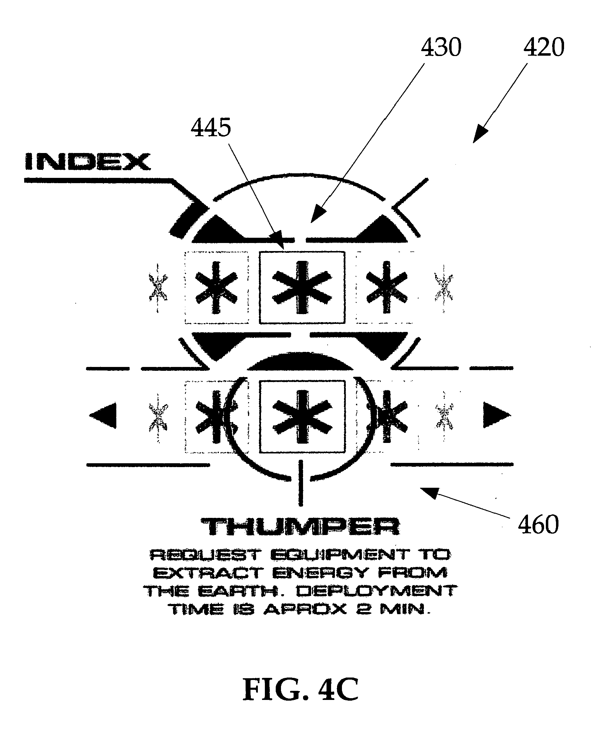

Referring now to FIG. 4C, according to some exemplary embodiments, navigation wheel 420 may include circular main wheel 430 that may be disposed horizontally and intersect a centerline of the navigation wheel 420. Further, selecting the current selection 445 may display an additional wheel 460 disposed either above or below the main wheel 430. It will be understood that while the wheels of the navigation wheel 420 have been disclosed as including vertically and horizontally disposed wheels, the wheels may be aligned diagonally or in any other configuration that may depend in part upon the geometrical configuration of the navigation wheel 420.

One of ordinary skill in the art may appreciate that many other suitable configurations of the navigation wheel 420 may be utilized in accordance with the present invention. For example, (although not shown) the navigation wheel 420 may include a rectangular box menu, rather than the circular wheel configuration as described above. The rectangular box may have a plurality of dropdown menus or list boxes that include icons that correspond to underlying computer program functions, or other global computing system functions.

In addition to embodiments that may include a mouse, some embodiments may include motion controllers or body tracking systems to control the navigation wheel 420 and interactions with the computer program 305. Non-limiting examples include motion controllers that are commercially available and sold alone or in combination with gaming consoles such as motion controllers commercially available and sold under the names Nintendo Wii (Nintendo Co., Ltd.), Sony Move (Sony Computer Entertainment, Inc.), and Microsoft Kinect (Microsoft Corporation).

According to exemplary embodiments, the navigation wheel 420 may be operatively connected and controlled by an input device 260 such as a keyboard and/or a mouse. The mouse (not shown) may include a central scroll wheel flanked by left and right buttons. The navigation wheel 420 may be called up and displayed by clicking a button on an input device 260 such as a keyboard. When the navigation wheel 420 is displayed on the program environment 400, the end user may utilize the mouse to scroll through the icons 440 of the main wheel 430 until the desired selection is displayed as the current selection 445. The user may select the current selection 445 by clicking the left mouse button. If clicking the current selection 445 brings up an additional wheel, the end user may likewise scroll and choose a selection from the additional wheel. To cancel the current selection 445, the end user clicks the right mouse button. It will be understood that if the navigation wheel 420 is displaying an additional wheel, clicking the right mouse button may cause the navigation wheel 420 to display the wheel vertically above the wheel in the wheel hierarchy (see FIG. 6). Moreover, clicking the right mouse button on the main wheel 430 may cause the navigation wheel 420 to close. In various embodiments, the scroll wheel of the mouse is capable of performing the functionality of either the left or right mouse button. It will be understood that the one or more of the functionalities of the mouse may be performed by one or more additional input devices keyboard, joystick, etc.

While the navigation wheel 420 has been disclosed as being utilized in conjunction with a computer program 305 such as a video game, applications for the navigation wheel 420 for controlling at least a portion of the flow of program activity within various types of computer programs 305 are also contemplated. The navigation wheel 420 may be utilized in conjunction with general purpose computer applications where the navigation wheel 420 may be called up anywhere under a mouse cursor and provide a selections relative to the object (interactive or otherwise) being highlighted by the mouse, where the interaction is non-modal and does not restrict the end user from moving the mouse or manipulating the keyboard.

Although not shown, non-limiting examples of general purpose computer applications include an operating system, wherein the end users may position the mouse cursor over file icons or applications and select a key or mouse button to call up the navigation wheel 420. Using the mouse wheel or keyboard equivalents, the end user may select from a pop-up menu of options generated by the graphical user interface module. The end user may move from icon to icon and the menu would change on the fly to reflect updated selections relevant to the icon being pointed to by the cursor. End users may also type or otherwise interact with the operating system during interactions with the navigation wheel 420.

Another application includes graphic design programs (e.g., Photograph and 3D Modeling). End users may select elements of a graphic design and press a key to call up the navigation wheel 420 to manipulate options relevant to a graphical object within the design landscape. Alternatively, end users may highlight a photograph from an array of photographs and call up the navigation wheel 420 to display selections for that particular photograph, while preserving the ability of the end user to move the mouse around and type freely to execute addition functionalities such as renaming additional photographs on the fly.

Additional embodiments may include word processing programs where end users may call up the navigation wheel 420 over any word highlighted and bring up selections corresponding to the highlighted word such as alternate synonyms or options to bold or italicize words. It will be understood that the selections may change as the mouse cursor travels across additional words. End users may freely type at any time to change the highlighted word and observe the navigation wheel 420 changing selections on the fly.

Other embodiments may include spreadsheets where the end user may highlight any cell and pull up the navigation wheel 420 for selections corresponding to the highlighted cell. Examples of selections may include the cell formula, highlighting, etc.

In accordance with the present disclosure, other embodiments may include web browsers where an end user may highlight any part of a web page, image, URL, etc. and call up the navigation wheel 420 which includes a wheel menu that may be updated on the fly as the mouse cursor travels across the web page interacting with various objects and presenting the end user with selections that correspond to the object.

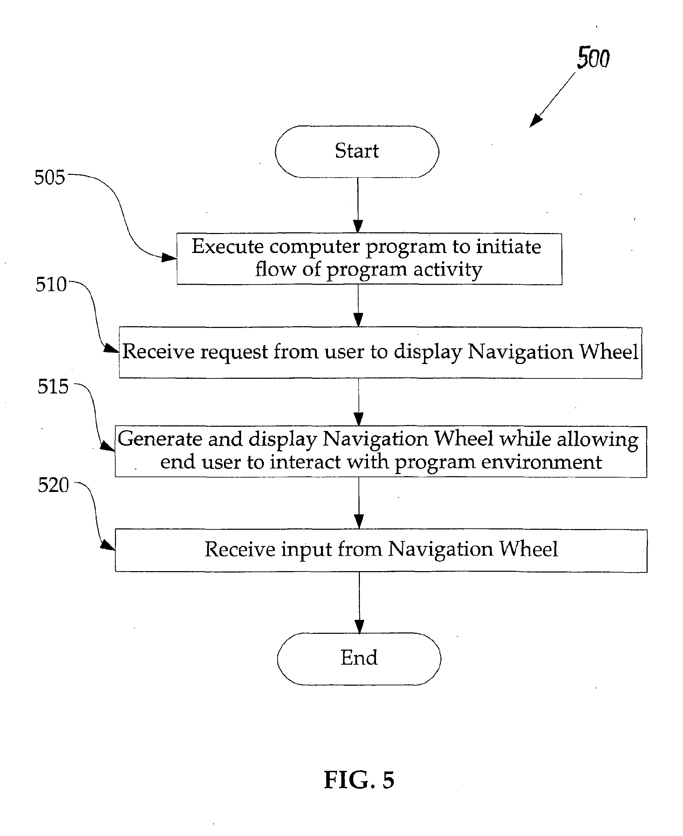

Referring now to FIG. 5, a flow chart of a method 500 for controlling at least a portion of the flow of program activity of a computer program is illustrated. Step 505 begins with the execution of the computer program to initiate a flow of program activity. The flow of program activity includes the generation of a program environment including, for example, a landscape having one or more interactive objects. In step 510, the end user may interact with the program environment by way of one or more input devices such as a keyboard or mouse. During step 510 of interacting with the program environment, the end user may request the computer program to display a graphical menu in the form of a navigation wheel having one or more selections corresponding to functions corresponding to the one or more interactive objects. The navigation wheel may be called up by operation of one or more of the input devices, for example, clicking a key on the keyboard. The navigation wheel is generated by the graphical menu module and may include selections corresponding to the interactive object with which the end user is interacting.

In step 515, the end user interacts with the navigation wheel by scrolling through the selections of the navigation wheel via the input devices and choosing one of the selections. During the step 515, the end user may interact with the program environment while utilizing the navigation wheel without interruption. Once chosen, the end user may close the navigation wheel to end the method 500.

Referring now to FIG. 6, showing a schematic representation of a navigation menu hierarchy 600. As background, during the method 500 described above, the end user calls up the navigation wheel in response to an interaction with an interactive object such as an avatar of another end user located with the landscape of the program environment. The navigation menu hierarchy 600 includes a main wheel of selections shown as a vertical list 605a-e corresponding to actions that may be taken relative to the avatar. Choosing selection 605c by clicking the left mouse button causes an additional wheel to be displayed having the selections shown in vertical list 610a-c. It will be understood that clicking the right mouse button may cause the vertical list 605a-e to be displayed in place of the current list 610a-c. Additionally, clicking the right mouse button when the vertical list 605a-e is displayed may cause the navigation wheel to close. Generally speaking, the navigation menu hierarchy 600 may include any number of vertical lists each having any number of selections based upon the particular interactive object interacted with.

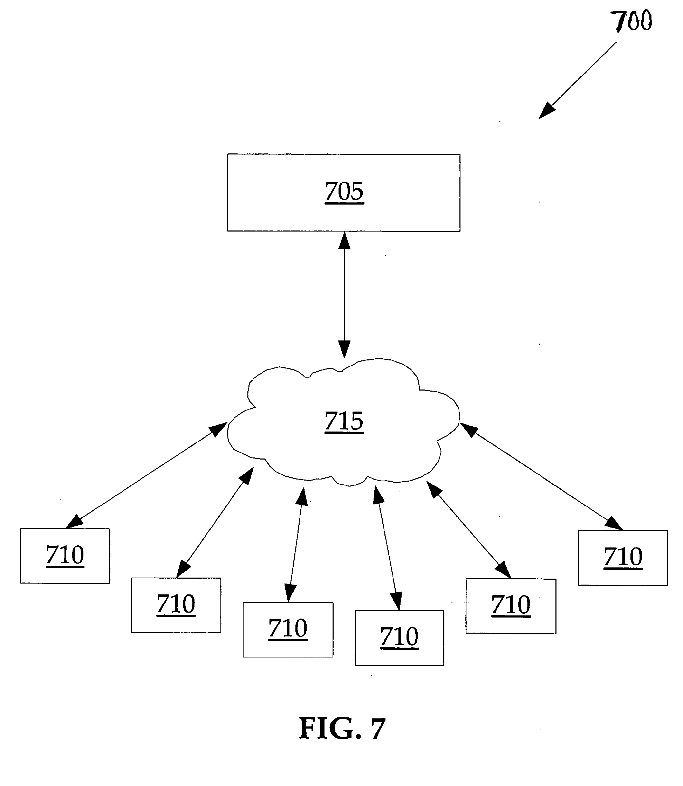

Referring now to FIG. 7, according to some embodiments, the navigation wheel may be employed to control at least a portion of a flow of client program activity of an online videogame 700. In general, an online videogame 700 may include both a global program 705 generating and maintaining a flow of global program activity and a plurality of client programs 710 generating and maintaining a flow of client program activity based in part upon the global flow of program activity. It will be understood that the client programs 710 may be located on client computing systems located remotely from the global program 705 operating on a world server, wherein the global program and client programs are in continuous communication over a network 715. It will be further understood that the client program 710 may be distributed to each client computing system over the network 715 from the world server 705 or may be included as instructions on a computer readable storage medium (not shown) executable on the client computing system.

Executing the global program 705 begins a flow of global program activity that includes maintaining a global environment and monitoring the location of each of the end users relative to the global environment. Moreover, the flow of global program activity may include monitoring interactions between end users and/or between end users and the global environment. It will be understood that in some embodiments, the online videogame may include a single end user directed game rather than accommodating a plurality of end users that may interact with each other and the global environment.

The global environment may include a plurality of global objects such as buildings, natural formations (rocks, hills, mountains), landscaping (trees, grass, water). It will be understood that at least a portion of the global objects may be interactive such that an end user may be allowed to take certain actions relative to the object, for example, enter a building, remove a rock from the ground, swim through a river, and the like.

The end users may interact with the global environment by interacting with a local environment generated by a client program 710 operating on the client computing system. It will be understood that the local environment represents at least a portion of the global environment generated and maintained by the global program. The client computing systems continuously receive input from the world server indicative of the changes to the global environment caused by other end users and/or the global program 705 in response to end user interactions. It will be understood that the local environment may change over time as the end user moves around the global environment.

It will be understood that the local environment generated by the client program is dynamic and constantly changing even when the end user is static. For example, even though the end user may not be moving or interacting with the local environment, the local environment may change as the global program generates objects that interact with the local environment (or the end user) or as other end users move into the local environment from other adjacent or remote portions of the global environment.

The end users may interact with the local environment by way of a graphical menu displayed in conjunction with the local environment. As background, commonly known graphical menus utilized in online videogames are often overlaid on the local environment by the client program and obscure large portions of the local environment. Furthermore, these commonly known menus interrupt the ability of the end user to interact with the local environment during utilization thereof leading to unrealistic game play (i.e., where the flow of game play is interrupted). Moreover, these effects may diminish the otherwise realistic and time sensitive aspects of online videogames. It will be understood that the phrase "time sensitive" relates to the time in which the local environment is updated via information received from the global program and displayed by the client program. Accessing menus according to these commonly known methods unduly segments the flow of client program activity into game play time and menu utilization time in order to prevent unfairness in game play. With regards to fairness of play, if the end user is precluded from interacting with the local environment while accessing menus and the flow of client program activity is not interrupted, other end users may be able to take advantage of an end user by attacking the end user while the end user is essentially "blind" or incapable of reacting.

Therefore, in accordance with the present disclosure, the graphical menu in the form of the navigation wheel remedies the deficiencies of commonly known menus by allowing end users to interact with the navigation wheel without interrupting the flow of client program activity (i.e., interactions with the local environment).

In operation, an end user may interact with another end user located within the same portion of the global environment. The client programs 710 of the client computing systems generate local environments (having a landscape with interactive objects) based upon the location of the end users within the global environment.

The end user may interact with the local environment and/or another end user within the same portion of the global environment by way of the navigation wheel. For example, calling up the navigation wheel and moving the navigation wheel proximate the avatar of the other end user may cause the navigation wheel to display selections indicative of the other end user (e.g., name, rank, level, and the like). Moreover, the navigation wheel may include selections such "ATTACK," wherein the end user may select an offensive maneuver to employ against the other end user.

It will be understood that during interaction with the navigation wheel the ability of the end user to interact with other aspects of the local environment continues uninterrupted. For example, as the end user is selecting a weapon via the navigation wheel, the end user is free to move within the local environment to take cover or hide behind an object.

The term "and/or" may indicate that any combination of elements connected by "and/or" may be used. For example, two words or expressions in a phrase using "and/or" may mean one or the other or both.

While various embodiments have been described above, it should be understood that they have been presented by way of example only, and not limitation. The descriptions are not intended to limit the scope of the technology to the particular forms set forth herein. Thus, the breadth and scope of a preferred embodiment should not be limited by any of the above-described exemplary embodiments. It should be understood that the above description is illustrative and not restrictive. To the contrary, the present descriptions are intended to cover such alternatives, modifications, and equivalents as may be included within the spirit and scope of the technology as defined by the appended claims and otherwise appreciated by one of ordinary skill in the art. The scope of the technology should, therefore, be determined not with reference to the above description, but instead should be determined with reference to the appended claims along with their full scope of equivalents.

## Claims

1. A method of controlling at least a portion of a flow of program activity of a computer program (305), the method comprising:
executing (505), by a processor, a computer program (305) stored in memory to initiate the flow of program activity, the flow of program activity comprising:
a program environment (400) generated by the computer program (305) and displayed on a graphical user interface (270), wherein the computer program (305) is adapted to allow an end user to interact with the program environment (400); and
at least one graphical menu (420) generated by the computer program (305) and being displayed on the graphical user interface (270) in conjunction with the program environment (400), wherein the computer program (305) is adapted to allow an end user to interact with the at least one graphical menu (420) without interrupting the ability of the end user to interact with the program environment (400).

2. The method of claim 1, wherein the end user interacts with the at least one graphical menu (420) and/or the program environment (400) utilizing at least one input device (260).

3. The method of claim 2, wherein the program environment (400) includes one or more interactive objects (415); wherein the at least one graphical menu (420) is operatively coupled to the at least one input device (260); and wherein the at least one graphical menu (420) is generated during the flow of program activity by:
receiving (510) input from the at least one input device (260) indicative of an interaction with one of the one or more interactive objects (415); and
assembling (515) the graphical menu (420) by arranging one or more selections to form a main wheel (430), wherein the one or more selections correspond to the functions of an interactive object (415) being interacted with.

4. The method of claim 2 or 3, wherein the at least one graphical menu (420) is selectively displayed in response to a request to display the graphical menu (420), wherein the request to display the graphical menu (420) preferably includes receiving input from the at least one input device (260).

5. The method of any of claims 1-4, wherein the graphical menu (420) includes one or more selections corresponding to one or more functions of the computer program (305) that when executed affect at least a portion of the flow of program activity.

6. The method of any of claims 1-5, wherein the graphical menu (420) includes a plurality of selections arranged to form a main wheel (430), wherein the each of the selections represents one or more functions that affect at least a portion of the flow of program activity, and further wherein the main wheel (430) is rotatable via input received from the at least one input device (260).

7. The method of claim 6, wherein one of the plurality of selections is displayed as a current selection (445) on the graphical menu (420), wherein the current selection (445) changes as the main wheel (430) rotates.

8. The method of claim 7, wherein receiving input indicative of a selection of the current selection (445) displays an additional wheel (460) in place of the main wheel (430), the additional wheel (460) including an additional plurality of visual objects representing one or more functions corresponding to the current selection that when executed affect at least a portion of the flow of program activity.

9. The method of claim 7 or 8, wherein the at least one input device (260) includes a mouse having at least one of:
a scroll wheel configured to change the current selection (445), the scroll wheel being preferably capable of selecting the current selection (445);
a first button configured to select the current selection; and
a second button configured to cancel canceling the current selection.

10. The method of claim 9, wherein input received from the second button causes the main wheel (430) to be displayed if an additional wheel (460) is being displayed and/or wherein input received from the second button closes the graphical menu (420) if the main wheel (430) is being displayed.

11. The method of any of claims 3-10, wherein the at least one graphical menu (420) is generated upon an interaction between the at least one input device (260) and one of the one or more interactive objects (415).

12. The method of any of claims 3-11, wherein an interaction includes locating proximate to the at least one interactive object (415), a cursor operatively coupled to the at least one input device (260) and selecting the at least one interactive object (415) via the at least one input device (260).

13. The method of any of claims 1-12, wherein the at least one graphical menu (420) is non-modal.

14. A system for controlling at least a portion of a flow of program activity of a computer program, the system comprising:
a memory (220) adapted to store the computer program (305);
a processor (210) adapted to execute the computer program (305) stored in memory (220) to initiate the flow of program activity, the flow of program activity comprising:
a program environment (400) generated by a environment module of the computer program (305), the program environment (400) being displayed on a graphical user interface (270), wherein the computer program (305) is adapted to allow an end user to interact with the program environment (400); and
at least one graphical menu (420) generated by a graphical menu module (335), the at least one graphical menu (420) being displayed on the graphical user interface (270) in conjunction with the program environment (400), wherein the computer program (305) is adapted to allow an end user to interact with the at least one graphical menu (420) without interrupting the ability of the end user to interact with the program environment (400).

15. A computer readable storage medium having a computer program (305) embodied thereon, the computer program (305) executable by a processor (210) in a computing system to perform a method for controlling at least a portion of a flow of program activity of the computer program according to any of claims 1-13.
